## Europäisches Patentamt
## European Patent Office
## Office européen des brevets

(19)

(11) Publication number: **0 032 515**
**B1**

(12)
# EUROPEAN PATENT SPECIFICATION

(45) Date of publication of patent specification: **09.05.84**

(51) Int. Cl.³: **G 06 F 9/38**

(21) Application number: **80901417.8**

(22) Date of filing: **25.07.80**

(86) International application number:
**PCT/JP80/00171**

(87) International publication number:
**WO 81/00474 19.02.81 Gazette 81/5**

(54) **A METHOD OF PIPELINE CONTROL FOR A COMPUTER.**

(30) Priority: **28.07.79 JP 96231/79**

(43) Date of publication of application:
**29.07.81 Bulletin 81/30**

(45) Publication of the grant of the patent:
**09.05.84 Bulletin 84/19**

(84) Designated Contracting States:
**DE FR GB**

(56) References cited:
**JP - A - 53 081 032
US - A - 3 947 822
US - A - 4 040 033
US - A - 4 118 776**

**IBM TECHNICAL DISCLOSURE BULLETIN, vol.
14, no. 9, February 1972 New York US P.N.
DUGGAN: "Multiple instruction stream
microprocessor organisation" pages 2739-2740
IEEE CONFERENCE PROCEEDINGS "The 14th
annual symposium on Computer Architecture"
March 1977 New York, US KOGGE: "The
microprogramming of pipelined processors",
pages 63-69**

(73) Proprietor: **FUJITSU LIMITED
1015, Kamikodanaka Nakahara-ku
Kawasaki-shi Kanagawa 211 (JP)**

(72) Inventor: **MIZUSHIMA, Yoshihiro
390-16-111, Shinsaku Takatsu-ku
Kawasaki-shi Kanagawa 213 (JP)**

(74) Representative: **Abbott, Leonard Charles et al,
GILL JENNINGS & EVERY 53-64 Chancery Lane
London WC2A 1HN (GB)**

Courier Press, Leamington Spa, England.

## Description

The present invention relates to a method of pipeline control for a computer.

In a pipeline system, an instruction is executed incrementally on a stream of data as each operand passes a station in the pipeline. At any moment, different elemental portions of instructions are being effected on different operands. A tag is used for instructing each of the steps of one instruction on one operand. An example of the use of such tag data in a pipeline system is described in IBM Technical Disclosure Bulletin, Vol. 14, No. 9, February 1972, pages 2739—2740; this discloses a pipeline system in which microinstructions are executed simultaneously from the control storage of four logical microprocessors, the micro-instructions being tagged according to stream and migrating through four platforms, one for each of four phases of the execution, each platform containing those de-. codes and controls necessary during that particular phase of execution.

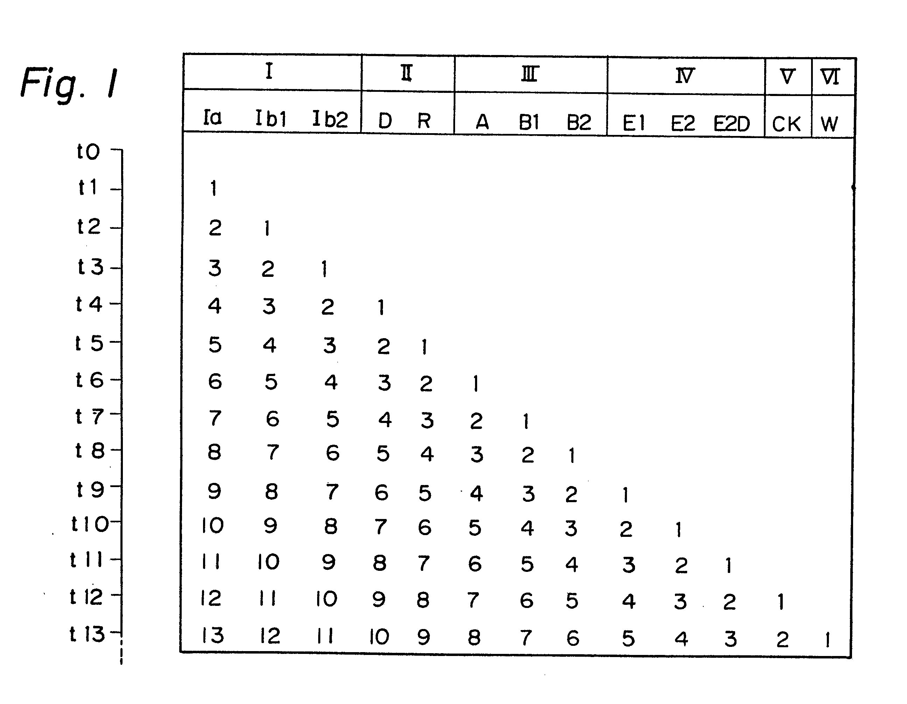

In general, when an electronic computer is to be controlled relying upon a pipeline control method, instruction 1 through instruction 13 successively pass through processing stages I through VI according to a time as determined by reference clock cycles t0, t1, t2, ... t13, as illustrated in Figure 1. For example, in the processing stage I, an instruction is taken out by processing cycles Ia, Ib1 and Ib2. In the processing stage II, an instruction is decoded by processing cycles D and R. In the processing stage III, an operand is read-out by processing cycles A, B1 and B2. In the processing stage IV, an operation is executed by processing cycles E1, E2 and E2D. In the processing stage V, a result of operation is checked by a processing cycle CK. In the processing stage VI, the result of operation is stored by a processing cycle W.

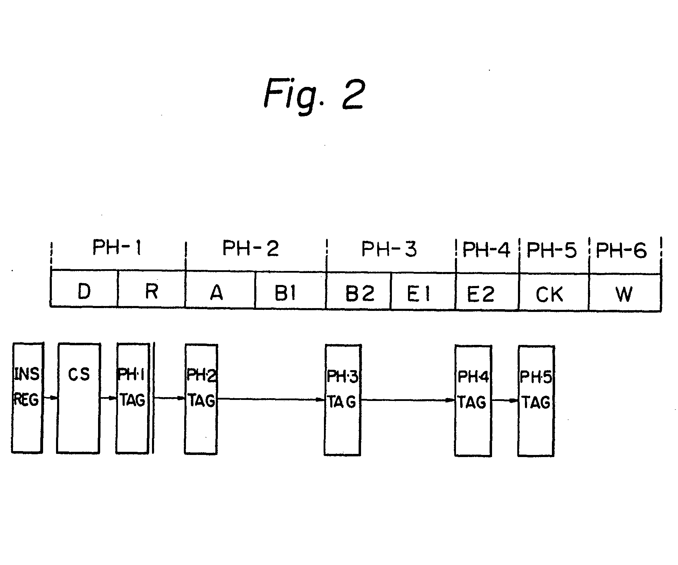

In a pipeline control system as illustrated in Figure 2, a processing flow is formed by a series of processing cycles consisting of a cycle D for decoding, a cycle R for reading, cycle A for address calculation, cycles B1 and B2 for operand read-out, cycles E1 and E2 for operation execution, a cycle CK for operation result checking, and a cycle W for operation result writing. These processing cycles are divided into phases. Namely, the cycles D and R are included in a phase-1, the cycles A and B1 are included in a phase 2, the cycles B2 and E1 are included in a phase-3, the cycle E2 is included in a phase-4, the cycle CK is included in a phase-5, and the cycle W is included in a phase 6. The processing flow is controlled by an instruction register INS REG, a control storage CS, a tag register of phase-1 PH · 1 TAG, a tag register of phase-2 PH · 2 TAG, a tag register of phase-3 PH · 3 TAG, a tag register of phase-4 PH · 4 TAG, and a tag register of phase-5 PH · 5 TAG.

Tag data necessary for executing instructions are stored in the control storage CS. When instructions are to be executed, the tag data are successively read out from the control storage CS depending upon the data of the instruction register INS REG, and are supplied to a group of tag registers PH · 1 TAG, PH · 2 TAG, PH · 3 TAG, PH · 4 TAG and PH · 5 TAG.

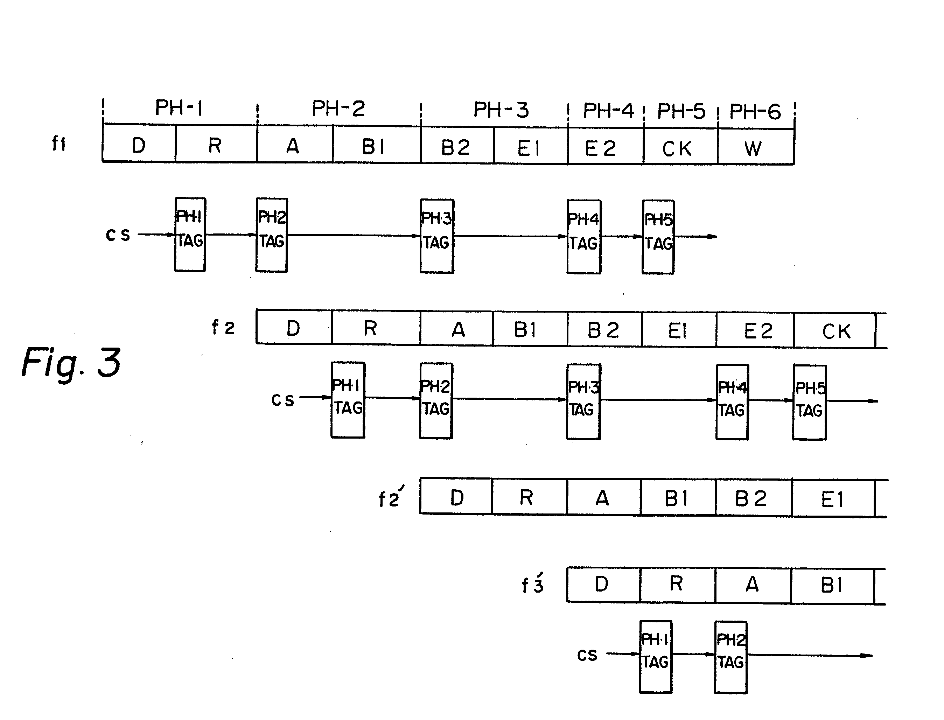

The operation of the conventional pipeline control system of Figure 2 is illustrated in Figure 3. Let it be assumed that an operation consisting of two operation flows (f1 and f2) is carried out for one instruction. In this case, even if the same operation flow such as a move character MVW is repetitively executed, the phase-1 PH · 1 generates a predetermined tag PH · 1 TAG every time for each operation flow. However, when one instruction is finished and then another operation of another instruction is to be carried out, a tag data for another operation must be taken out from the control storage CS and must be fed to the tag registers PH · 1 TAG, PH · 2 TAG, PH · 3 TAG, PH · 4 TAG and PH · 5 TAG. When one instruction is to be switched to another instruction, therefore, a procedure is required to withdraw the previously employed tag and to introduce a new tag. The above procedure, however, requires an additional operation flow f2' as well as additional time for effecting the additional operation flow f2'. This is because the decision of switching to the next instruction cannot be established before phase-2 of the last operation flow of the present instruction. For example the repetition of the preceding flow may depend on whether the value of the operand data has reached a predetermined value and this is obtained at the earliest only after cycle B1 in phase-2. In phase-2, however, the phase-1 of the next operation flow f2' has already started. With the system of Figure 2, therefore, the operation speed of the whole apparatus tends to be decreased.

The present invention has been proposed to solve the above-mentioned problems inherent in the conventional systems.

The principal object of the present invention is to increase the operation speed of a pipeline computer system by eliminating the additional operation flow which has hitherto been employed when one instruction was to be repeated with different data.

The present invention consists in a method of pipeline control for a computer in which flows of microprocessing operations proceed successively through a plurality of microprocessing stages and in which predetermined tag data are allocated to each of the microprocessing stages to allow successively initiated flows of microprocessing operations to proceed through the microprocessing stages one after another in a time-overlapped manner, characterized in that a plurality of tag registers is associated with the stage performing at least an address calculation cycle and in that predetermined tag data are stored during a stage in the execution of a first sequence of micro-operation flows in order to repetitively execute a flow of microprocessing operations which is based upon the same tag data, and required tags are selected from the tags stored in the tag registers one after another for executing second and subsequent sequences of micro-operation flows in which the same micro-operation flows are repeated, so that execution of a later one of the said operation flows is initiated at the stage performing at least an address calculation cycle without executing anew a decoding and reading cycle associated with a previous stage.

With such a pipeline control system, when a first flow of processing operations is being repeated without the decode and read cycle, the subsequent different operation flow can be decoded and read and its tag data entered into the PH · 1 TAG register in readiness, so that this next operational flow can be started with the address calculation stage immediately if it is established that the latest repetition of the preceding flow of operations is the last.

Our Japanese specification JP—A—53—81032 describes and claims a data processing pipeline control system having: a control memory for storing microinstructions corresponding to the TAGs used in the method of the present invention, the processing being carried out in accordance with the micro-instructions read out from the control memory; a holding register constituted by shift register stages holds the content of the read-out micro-instructions or the content of partial fields of the micro-instructions during plural processing cycles, and a circuit portion to be controlled during plural processing cycles or a portion of the plural processing cycles on the basis of the content of the shift register stages.

As illustrated in JP—A—53—81032 a micro-instruction includes five fields controlling different blocks in a circuit to be controlled.

This circuit is constituted by a four-stage pipeline and a holding register is provided for each field for each stage after stage 0.

In one embodiment a counter is provided in the holding register of each of the stages so that the cycle number for holding each micro-instruction in each holding register, or the cycle number required for transmitting each micro-instruction to the next stage, can be selected optionally, the intention being that the manner of transmission of one micro-instruction, i.e. the cycle number of each phase of one flow, is made variable.

Contrary to this, in the system of the present invention, the cycle number in one flow is fixed, and a number of candidates are prepared at the outlet portion of a control storage unit so that switching to a flow related to another TAG can be carried out immediately i.e. without needing time for reading out the control storage unit.

US—A—4040033 is concerned with the repetitive execution of microprogram loops without repetitive reading of microprograms from a microprogram memory, but is not concerned with a pipeline control system. It employs a buffer memory having a number of word storage positions for storing micro-command words, all the micro-commands required for a loop being stored in the buffer memory. For each buffer memory storage position there is assigned a marker flip-flop. This flip-flop is however only a flag indicating the validity or invalidity of the entry in the corresponding position of the buffer memory; the contents of the marker flip-flops differ from tag data in that they are not information read from the control memory, nor do these contents constitute information which is transmitted through a sequence of stages in a pipeline.

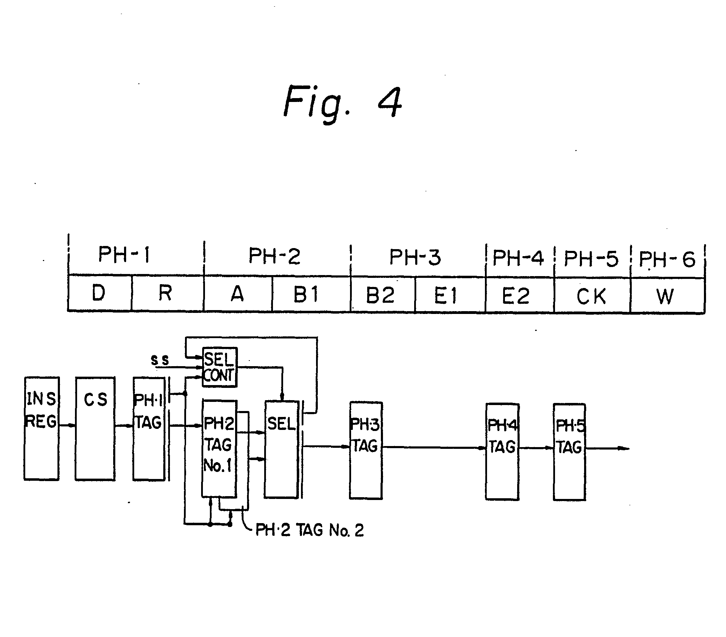

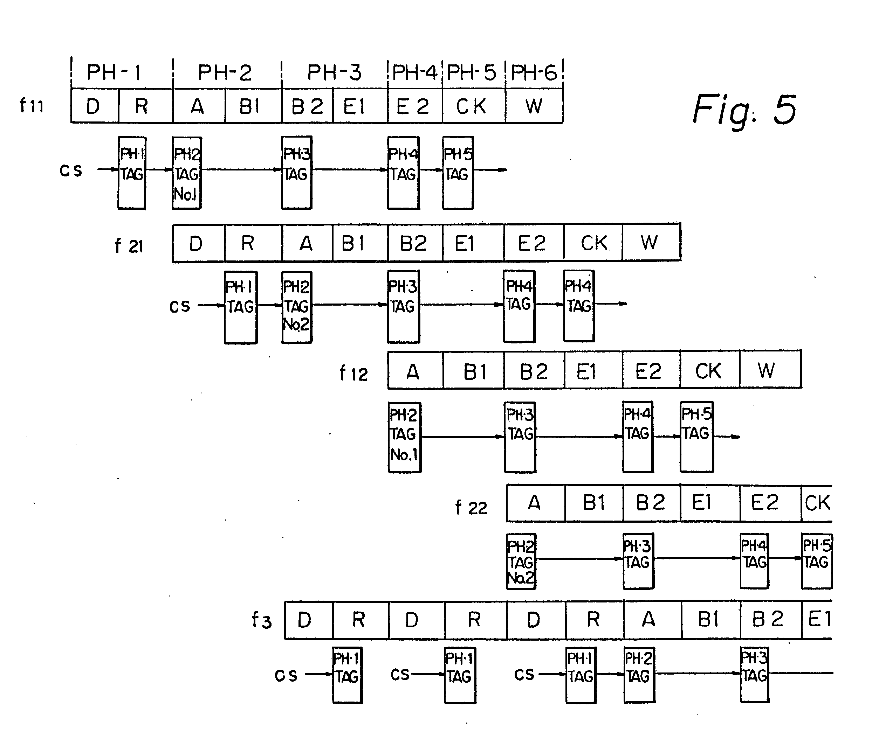

In order that the invention may better understood, an example of a pipeline control system embodying the invention will now be described with reference to Figures 4 and 5 of the accompanying drawings. In the drawings:—

Figure 1 is a diagram schematically illustrating, in series, an operation for pipeline-controlling an electronic computer;

Figure 2 is a diagram of tag registers which are arranged in series to illustrate an operation of a conventional pipeline control system,

Figure 3 is a diagram illustrating, in series, an operation of a series of tag registers of Figure 2,

Figure 4 is a diagram of a series of tag registers which are used for a pipeline control system according to an embodiment of the present invention, and;

Figure 5 is a diagram illustrating, in series, an operation of the series of tag registers of Figure 4.

Figure 4 illustrates a series of processing cycles in an operation of a pipeline control system. The series of processing cycles consists of a cycle D for decoding, a cycle R for reading, a cycle A for address calculation, cycles B1 and B2 for operand read-out, cycles E1 and E2 for operation execution, a cycle CK for operation result checking, and a cycle W for operation result writing. These processing cycles are divided into phases. The cycles D and R are included in a phase-1 (PH · 1), the cycles A and B1 are included in a phase-2 (PH · 2), the cycles B2 and E1 are included in a phase-3 (PH · 3), the cycle E2 is included in a phase-4 (PH · 4), the cycle CK is included in a phase-5 (PH · 5), and the cycle W is included in a phase-6 (PH · 6). The operation is performed by an instruction register INS REG, a control storage CS, a tag register PH · 1 TAG of the phase-1, tag registers PH · 2 TAG No. 1 and PH · 2 TAG No. 2 of the phase-2, a selection controller SEL CONT, a selector SEL, a tag register PH · 3 TAG of the phase-3, a tag register PH · 4 TAG of the phase-4, and a tag register PH · 5 TAG of the phase-5. The phase-2 (PH · 2) contains a plurality of tag registers as denoted by No. 1 and No. 2 which will be selected by the selector SEL that is controlled by output signals of the selection controller SEL CONT.

The selection controller receives an input from a first field of the phase-1 TAG register, and also an input from a first field of the output of the selector. The second field in the output of the PH · 1 TAG register is applied to the two registers PH · 2 TAG No. 1 and PH · 2 TAG No. 2.

Figure 5 illustrates an example of an operation of the system shown in Figure 4. In this case, the operation consists of two operation flows f11 and f21. Initially, a tag for phase 1 is written into the register PH · 1 TAG. Next, a tag for phase 2 is written into the register PH · 2 TAG No. 1, in phase 2 of the first operation flow f11. Thereafter, the tag for phase 2 is written into the register PH · 2 TAG No. 2, for the second operational flow f21, the PH · 2 TAG No. 1 and PH · 2 TAG No. 2 registers being selected in succession by the selector SEL for the two operation flows. These operation flows proceed from phase 1 to phase 5 and are repeated until a finish of operation is detected. As in this case there is no change in the operation command and repetition is required, the next sequence of the operation flows f12 and f22 is a repetition of the earlier operation flows, with the exception that the cycle D for decoding and the cycle R for reading in the first phase, are omitted. Under the control of the selection controller SEL CONT, the selector SEL selects first the register PH · 2 TAG No. 1 for the phase 2 tag in the flow f12 and next the register PH · 2 TAG No. 2 as a tag for the second phase, in flow f22, both of the flow f12 and f22 being initiated from the cycle A for address calculation.

In the meantime, that is to say while the repetition of the previous operation flow is taking place, the next tag for the next different instruction (flow f3) is taken out and stored, using the PH · 1 TAG register of phase 1 which is in a vacant state once phase 2 of the flow f21 has commenced. The cycle D and the cycle R are repeated in the flow 3 until the last operation flow of the previous operation is detected. After the last operation flow of the previous operation has been detected, the operation is immediately switched to another operation flow, and the cycle A and subsequent cycles are carried out following the cycle D and the cycle R. If the end of the repetition is detected in the phase-2 (A, B1) of the flow f22, for example, the phase-2 of the next flow f3 is immediately started following the phase-2 of the flow f22. That is to say, the additional operation flow f2′ required in the conventional operation of Figure 3, is eliminated. Consequently, the operation speed of the pipeline-type computer system can be prevented from being decreased.

The tags of phase-2 are selected by the selector SEL which is controlled by the selection controller SEL CONT. The above-mentioned selection can be effected by employing either a selection bit in the tags of phase-2 or a selection modification signal SS which is applied to the selection controller SEL CONT. Further, the number of tags in the phase-2 need not be limited to two, i.e., tag No. 1 and tag No. 2, but may be three or more.

## Claims

1. A method of pipeline control for a computer in which flows a microprocessing operations proceed successively through a plurality of microprocessing stages and in which predetermined tag data are allocated to each of the microprocessing stages to allow successively initiated flows of microprocessing operations to proceed through the microprocessing stages one after another in a time-overlapped manner, characterized in that a plurality of tag registers (PH · 2 TAG No. 1 and PH · 2 TAG No. 2) is associated with the stage performing at least an address calculation cycle and in that predetermined tag data are stored during a stage in the execution of a first sequence of micro-operation flows in order to repetitively execute a flow of microprocessing operations which is based upon the same tag data, and required tags are selected from the tags stored in the tag registers one after another for executing second and subsequent sequences of micro-operation flows in which the same micro-operation flows are repeated, so that execution of a later one of the said operation flows is initiated at the stage performing at least an address calculation cycle without executing anew a decoding and reading cycle associated with a previous stage.

2. A method of pipeline control for a computer as set forth in claim 1, wherein one of the said plurality of tag registers (PH · 2 TAG No. 1 and PH · 2 TAG No. 2) is selected by means of a selector (SEL) under the control of a selection controller (SEL CONT) receiving inputs from the preceding tag register (PH1TAG) and from the selector (SEL).

3. A method of pipeline control according to claim 2, wherein while one flow of microprocessing operations is repeated without the decoding and reading cycle, the tag data for the next operational flow (f3) is entered into a first tag register associated with the decoding and reading cycle, whereby the next operational flow can be initiated without delay when the last repetition of the preceding operational flow is sensed.

## Patentansprüche

1. Verfahren zur Pipeline-Steuerung für einen Computer, in dem Ströme von Mikroprozeßoperationen sukzessive durch eine Anzahl von Mikroverarbeitungsstufen fortschreiten und bei welchem vorbestimmte Tag-Daten jeder der Mikroverarbeitungsstufen zugeordnet sind, um sukzessiv initiierte Ströme von Mikroprozeßoperationen, eine nach der anderen in zeitlich überlappender Weise durch die Mikroprozeßstufen fortschreiten zu lassen, dadurch gekennzeichnet, daß die Anzahl von Tag-Registern (PH · 2 TAG No. 1 und PH · 2 TAG No. 2) der Stufe zugeordnet ist, welche wenigstens einen Adressenkalkulationszyklus durchführt, und daß die vorbestimmten Tag-Daten während einer Stufe bei der Ausführung einer ersten Folge von Mikro-Operationsströmen gespeichert sind, um repetitiv einen Fluß von Mikroprozeßoperationen durchzuführen, welcher auf denselben Tag-Daten basiert, und daß erforderliche Tags von den in den Tag-Registern gespeicherten Tags eines nach dem anderen ausgewählt werden, um zweite und folgende Folgen von Mikro-Operationsflüssen durchzuführen, bei welchen dieselbe Mikro-Operationsströme wiederholt werden, so daß die Durchführung eines späteren der genannten Operationsströme bei einer Stufe initiiert wird, welche wenigstens einen Adressenkalkulationszyklus durchführt, ohne erneut den Decodierungs- und den Lesezyklus der zugeordneten vorherigen Stufe durchzuführen.

2. Verfahren zur Pipeline-Steuerung für einen Computer nach Anspruch 1, bei welchem eines der genannten Anzahl von Tag-Register (PH · 2 TAG No. 1 und PH · 2 TAG No. 2) mit Hilfe eines Selectors (SEL) unter der Steuerung durch einen Selections-Controllers (SEL CONT) durchgeführt wird, welcher Eingangszeichen von dem vorhergehenden Tag-Register (PH1TAG) und von dem Selector (SEL) empfängt.

3. Verfahren zur Pipeline-Steuerung nach Anspruch 2, bei welchem während ein Fluß von Mikroprozeßoperationen ohne den Decodier- und den Lesezyklus weiderholt wird, die Tag-Daten für den nächsten Operationsfluß (f3) in ein erstes Tag-Register eingegeben werden, welches dem Decodier- und Lesezyklus zugeordnet ist, wodurch der nächste Operationsfluß ohne Verzögerung initiiert werden kann, wenn die letzte Wiederholung des vorhergehenden Operationsflusses festgestellt wird.

**Revendications**

1. Procédé de commande pipe-line pour un calculateur dans lequel les débits d'opérations de micro-traitement, passent successivement par plusieurs étages de micro-traitement et dans lequel des données prédéterminées de marqueurs sont affectées à chacun des étages de micro-traitement pour permettre que des courants d'opérations de micro-traitement déclenchées successivement passent par les étages de micro-traitement, l'un après l'autre, avec un chevauchement dans le temps, caractérisé en ce que plusieurs registres de marqueurs (PH · 2 TAG N° 1 et PH · 2 TAG N° 2) sont associés avec l'étage effectuant au moins un cycle de calcul d'adresses et en ce que les données prédéterminées de marqueuers sont mémorisées pendant une phase de l'exécution d'une première séquence de courants de micro-opérations afin d'exécuter répétitivement un courant d'opérations de micro-traitement sur la base des mêmes données de marqueurs, les marqueurs nécessaires étant sélectionnés parmi les marqueurs mémorisés dans les registres de marqueurs, l'un après l'autre, pour l'exécution de la seconde séquence et des suivantes de courants de micro-opérations dans lequelles les mêmes courants de micro-opérations sont répétés, de manière que l'exécution d'un dernier desdits courants d'opérations soit déclenché à l'étage exécutant au moins un cycle de calcul d'adresses sans exécuter un nouveau cycle de décodage et de lecture associé avec un étage précédent.

2. Procédé de commande pipe-line pour un calculateur selon la revendication 1, dans lequel l'un desdits plusieurs registres de marqueurs (PH · 2 TAG N° 1 et PH · 2 TAG N° 2) sont sélectionnés au moyen d'un sélecteur (SEL) à la commande d'un dispositif de commande de sélection (SEL CONT) recevant des entrées du registre de marqueurs précédent (PH1 TAG) et du sélecteur (SEL).

3. Procédé de commande pipe-line selon la revendication 2, dans lequel pendant qu'un courant d'opérations de micro-traitement est répété sans le cycle de décodage et de lecture, les données de marqueurs pour le courant opérationnel suivant (f3) est introduit dans un premier registre de marqueurs associés avec le cycle de décodage et de lecture, de manière que le courant opérationnel suivant puisse être déclenché sans retard quand la dernière répétition du courant opérationnel précédent est détecté.

**Fig. 1**

| | I | | | II | | III | | | IV | | | V | VI |
|---|---|---|---|---|---|---|---|---|---|---|---|---|---|
| | Ia | Ib1 | Ib2 | D | R | A | B1 | B2 | E1 | E2 | E2D | CK | W |
| t0 | | | | | | | | | | | | | |
| t1 | 1 | | | | | | | | | | | | |
| t2 | 2 | 1 | | | | | | | | | | | |
| t3 | 3 | 2 | 1 | | | | | | | | | | |
| t4 | 4 | 3 | 2 | 1 | | | | | | | | | |
| t5 | 5 | 4 | 3 | 2 | 1 | | | | | | | | |
| t6 | 6 | 5 | 4 | 3 | 2 | 1 | | | | | | | |
| t7 | 7 | 6 | 5 | 4 | 3 | 2 | 1 | | | | | | |
| t8 | 8 | 7 | 6 | 5 | 4 | 3 | 2 | 1 | | | | | |
| t9 | 9 | 8 | 7 | 6 | 5 | 4 | 3 | 2 | 1 | | | | |
| t10 | 10 | 9 | 8 | 7 | 6 | 5 | 4 | 3 | 2 | 1 | | | |
| t11 | 11 | 10 | 9 | 8 | 7 | 6 | 5 | 4 | 3 | 2 | 1 | | |
| t12 | 12 | 11 | 10 | 9 | 8 | 7 | 6 | 5 | 4 | 3 | 2 | 1 | |
| t13 | 13 | 12 | 11 | 10 | 9 | 8 | 7 | 6 | 5 | 4 | 3 | 2 | 1 |

# Fig. 2

| PH-1 | | PH-2 | | PH-3 | | PH-4 | PH-5 | PH-6 |
|---|---|---|---|---|---|---|---|---|
| D | R | A | B1 | B2 | E1 | E2 | CK | W |

Fig. 3

0 032 515

# Fig. 4

| PH-1 | | PH-2 | | PH-3 | | PH-4 | PH-5 | PH-6 |
|------|---|------|-----|------|----|------|------|------|
| D | R | A | B1 | B2 | E1 | E2 | CK | W |

*Fig. 5*

|  | PH-1 | PH-2 | PH-3 | PH-4 | PH-5 | PH-6 |
|---|---|---|---|---|---|---|
| f11 | D · R | A · B1 | B2 · E1 | E2 | CK | W |

CS → PH·1 TAG → PH2 TAG No.1 → PH3 TAG → PH4 TAG → PH5 TAG →

f 21: D · R · A · B1 · B2 · E1 · E2 · CK · W

CS → PH·1 TAG → PH2 TAG No.2 → PH3 TAG → PH4 TAG → PH4 TAG →

f 12: A · B1 · B2 · E1 · E2 · CK · W

PH2 TAG No.1 → PH3 TAG → PH4 TAG → PH5 TAG →

f 22: A · B1 · B2 · E1 · E2 · CK

PH2 TAG No.2 → PH·3 TAG → PH4 TAG → PH5 TAG →

f3: D · R · D · R · D · R · A · B1 · B2 · E1

CS → PH·1 TAG    CS → PH·1 TAG    CS → PH·1 TAG → PH2 TAG → PH3 TAG